# EUROPÄISCHE PATENTSCHRIFT

(11) **EP 2 398 936 B1**
(45) Veröffentlichungstag und Bekanntmachung des Hinweises auf die Patenterteilung: **14.03.2018**
(21) Anmeldenummer: 10708094.7
(22) Anmeldetag: 30.01.2010
(51) Int. Cl.: C23C 30/00, C23C 28/00, F01D 5/28, F01D 9/04

(54) **EROSIONSSCHUTZ-BESCHICHTUNGSSYSTEM FUR GASTURBINENBAUTEILE**
EROSION RESISTANT COATING SYSTEM FOR GAS TURBINE COMPONENTS
UNE SYSTÈME DE REVÊTEMENT RÉSISTANTE À L'ÉROSION POUR ELÉMENTS DE TURBINE

(30) Priorität: 21.02.2009 DE 102009010110
(43) Veröffentlichungstag der Anmeldung: 28.12.2011
(73) Patentinhaber: MTU Aero Engines AG, 80995 München (DE)
(72) Erfinder: UIHLEIN, Thomas, 85221 Dachau (DE); EICHMANN, Wolfgang, 82178 Puchheim (DE); HEUTLING, Falko, 81377 München (DE)
(86) Internationale Anmeldenummer: PCT/DE2010/000102
(87) Internationale Veröffentlichungsnummer: WO 2010/094256

(56) Entgegenhaltungen:
- EP-A1- 0 366 289
- EP-A1- 0 455 419
- EP-A1- 1 866 459
- EP-A1- 2 088 225
- EP-A2- 1 088 908
- DE-A1-102007 005 755
- DE-A1-102007 027 335
- US-B1- 6 428 280

## Beschreibung

### GEBIET DER ERFINDUNG

Die Erfindung betrifft ein Gasturbinenbauteil aus einem Grundwerkstoff mit einem darauf vorgesehenen Erosionsschutz-Beschichtungssystem, welches ein Mehrschichtsystem aus mindestens einer duktilen, metallischen Schicht und mindestens einer harten, keramikhaltigen Schicht umfasst sowie ein entsprechendes Verfahren zur Herstellung eines derartigen Gasturbinenbauteils.

### STAND DER TECHNIK

Gasturbinenbauteile, wie beispielsweise Laufschaufeln, Leitschaufeln oder Turbinenauskleidungen, sogenannte shrouds, sind vielfältigen Einflüssen ausgesetzt, die dazu führen, dass derartige Bauteile vielfältige Eigenschaften aufweisen müssen. Beispielsweise müssen derartige Bauteile ausreichende Festigkeiten aufweisen, damit sie den entsprechenden Belastungen, wie Fliehkräfte und dergleichen, standhalten können. Darüber hinaus kann es durch die hohen Strömungsgeschwindigkeiten, mit der die angesaugte Luft durch die Turbine bewegt wird, zu Erosionserscheinungen an den Oberflächen der Gasturbinenbauteile kommen. Entsprechend ist es bekannt für diese Komponenten Erosionsschutzschichten vorzusehen, die einen erosiven Abtrag des Grundwerkstoffs, aus dem die Gasturbinenbauteile gebildet sind, vermeiden soll. Derartige Erosionsschutzsysteme sind beispielsweise in der DE 10 2007 027 335 A1, der DE 10 2004 001 3092 A1, der EP 0 674 020 A1, der EP 0 562 108 B1 oder der EP 0 366 289 A1 beschrieben. Diese Erosionsschutzschichten weisen üblicherweise mehrere Teilschichten aus duktilen, metallischen Werkstoffen und harten, keramikhaltigen Schichten auf, die teilweise mehrfach übereinander angeordnet sind.

Aufgrund der Temperaturschwankungen und der Unterschiede in der Zusammensetzung der Atmosphäre, der insbesondere Flugturbinen ausgesetzt sind, kann es bei Gasturbinenbauteilen mit derartigen Erosionsbeschichtungen zu einem verstärkten Korrosionsangriff beim Grundwerkstoff kommen, wenn die Erosionsschutzschicht Fehlstellen oder Beschädigungen, wie beispielsweise Risse oder Poren und dergleichen, aufweist.

Gemäß der EP 1 548 153 B1 wird versucht dieses Problem dadurch zu vermeiden, dass unterhalb der mittels Dampfphasenabscheidung abgeschiedenen Erosionsschutzschicht eine thermisch gespritzte Metall-Keramikschicht, ein sogenanntes Cermet, aufgebracht wird, um die Rissebildung zu vermeiden.

Die WO 2006/103127 A1 betrifft einen Korrosionsschutz eines Substrats, auf dem eine Schicht angeordnet ist, in der Partikel aus einem Kernmaterial und einer Hülle verteilt sind. Ferner kann auf der Schicht eine weitere Schicht vorgesehen sein. Es kann weiterhin vorgesehen sein, dass mehrere der Schichten auf dem Substrat aufgetragen sind. Die Partikel dienen als Opfer-Anoden für die Schicht oder das Substrat.

### OFFENBARUNG DER ERFINDUNG

### AUFGABE DER ERFINDUNG

Es ist deshalb Aufgabe der Erfindung eine Erosionsschutz-Beschichtung für Gasturbinenbauteile sowie entsprechende Gasturbinenbauteile bereitzustellen, bei der das Problem eines verstärkten Korrosionsangriffs des Grundwerkstoffs bei Schädigung der Erosionsschutzschicht vermieden wird. Gleichzeitig soll der Aufwand für die Herstellung der Erosionsschutzschicht niedrig gehalten und die übrigen Eigenschaften der Gasturbinenbauteile, insbesondere die Erosionsbeständigkeit sowie die Festigkeit und dergleichen nicht beeinträchtigt werden.

### TECHNISCHE LÖSUNG

Diese Aufgabe wird gelöst durch ein Gasturbinenbauteil mit den Merkmalen des Anspruchs 1, sowie ein Verfahren zur Herstellung eines entsprechenden Gasturbinenbauteils mit den Merkmalen des Anspruchs 13 Vorteilhafte Ausgestaltungen sind Gegenstand der abhängigen Ansprüche.

Die Erfindung geht von der Erkenntnis aus, dass der Korrosionsangriff des Grundwerkstoffs unterhalb der Erosionsschutz-Beschichtung im Stand der Technik dadurch zustande kommt, dass es in feuchten und wässrigen Umgebungen, wie sie beim Einsatz von Gasturbinen durch die entsprechende Luftfeuchtigkeit und dergleichen gegeben ist, zur Ausbildung eines sogenannten Lokalelementes kommt, wobei der Grundwerkstoff üblicherweise ein niedrigeres elektrochemisches Potenzial als die Erosionsschutzschicht aufweist, so dass es zu einem Angriff des Grundwerkstoffs kommt. Dem wird erfindungsgemäß dadurch entgegengewirkt, dass eine kathodische Korrosionsschutzschicht zwischen den Erosionsteilschutzsystem, welches die eigentliche Erosionsschutz-Beschichtung bildet, und dem Grundwerkstoff ausgebildet wird. Der kathodische Korrosionsschutz beruht dabei auf der Ausbildung eines entsprechenden Lokalelementes durch die kathodische Korrosionsschutzschicht und dem Grundwerkstoff, bei dem der Grundwerkstoff das höhere elektrochemische Potenzial hat, so dass die kathodische Korrosionsschutzschicht als Opferanode mit niedrigerem Potenzial aufgelöst wird, während der Grundwerkstoff geschützt ist.

Ein entsprechend ausgebildetes Erosionsschutz-Beschichtungssystem umfasst neben der kathodischen Korrosionsschutzschicht unmittelbar auf dem Grundwerkstoff ein Erosionsteilschutzsystem mit einem Mehrschichtsystem aus mindestens einer duktilen, metallischen Schicht und mindestens einer harten, keramikhaltigen Schicht. Das Erosionsteilschutzsystem kann gemäß den bekannten Erosionsschutzsystemen, wie sie insbesondere in der DE 10 2004 001 392 A1 und der DE 10 2007 027 335 A1 ausgebildet sind, verwirklicht werden, wobei der Offenbarungsgehalt der beiden zitierten Dokumente durch Verweis vollständig mit aufgenommen ist.

Derartige Schichtsysteme sind insbesondere für Grundwerkstoffe aus einem Titanbasiswerkstoff, einem Eisenbasiswerkstoff, einem Nickelbasiswerkstoff oder einem Kobaltbasiswerkstoff geeignet, wobei insbesondere der Eisenbasiswerkstoff chromhaltige Stähle oder Eisenbasis-Superlegierungen und der Nickelbasiswerkstoff Nickelbasis-Superlegierungen sowie der Kobaltbasiswerkstoff Kobaltbasis-Superlegierungen umfassen kann. Als entsprechende Basiswerkstoffe oder Basislegierungen werden die Legierungen bezeichnet, deren Hauptbestandteil das entsprechende Element, nach dem die Basislegierungen bezeichnet ist, umfasst, so dass beispielsweise bei einer Eisenbasislegierung der Hauptbestandteil Eisen ist. Insbesondere können bekannte Grundwerkstoff für den Einsatz bei Gasturbinenbauteilen, insbesondere Bauteilen für Flugturbinen, wie Leitschaufeln, Laufschaufeln, Shrouds und dergleichen, Verwendung finden.

Das Erosionsteilschutzsystem kann im einfachsten Fall aus einer Metallschicht und einer Keramikschicht bzw. keramikhaltigen Schicht gebildet sein, wobei die Metallschicht auch eine Metalllegierungsschicht sein kann, Derartige Schichten können dann wiederholt in einem Schichtstapel angeordnet sein. Darüber hinaus kann das Erosionsteilschutzsystem auch aus einem Vierschichtsystem gebildet sein, welches eine Metallschicht, eine Metalllegierungsschicht, eine Metall-Keramik-Mischschicht und eine Keramikschicht umfassen. Darüber hinaus sind auch Dreischichtsysteme mit beispielsweise einer Metalllegierungsschicht, einer Metall-Keramik-Mischschicht und einer Keramikschicht möglich. Diese Schichtenfolgen von 2, 3 oder 4 Schichten können mehrfach in dem Erosionsteilschutzsystem vorgesehen sein. Die einzelnen Teilschichten und hierbei insbesondere die Metall-Keramik-Mischschicht können auch als Gradientenschichten ausgebildet werden, bei denen sich die Zusammensetzung in Richtung der Schichtdicke verändert.

Für die Metallschicht und die Metalllegierungsschicht kommen vielfältige Metalle in Frage, wie beispielsweise für die Metallschicht Titan, Platin, Palladium, Wolfram, Chrom, Nickel oder Kobalt, sowie zusätzlich für die Metalllegierungsschicht metallische Elemente wie Eisen, Aluminium, Zirkon, Hafnium, Tantal, Magnesium, Molybdän oder Silizium.

Beispielsweise kann die Schichtenfolge des Erosionsteilsschutzsystems durch eine Nickelschicht, eine Nickel-Chromschicht, eine Metall-Keramikschicht mit Chrom und Stickstoff, wobei Chrom im Überschuss vorhanden ist, sowie eine Chrom-Nitridschicht gebildet sein. Alternativ kann als erste metallische Schicht auch eine Titanschicht, eine Palladiumschicht oder eine Platinschicht vorgesehen sein, auf welche ein TiCrAl- oder CoAlCr- Werkstoff aufgebracht ist. Danach kann als Metall-Keramik-Mischschicht CrAlN₁₋ₓ oder TiAlN₁₋ₓ vorgesehen sein, wobei als Keramikschicht TiAlN, TiAlSiN, AlTiN oder eine Mischung aus TiN und AIN vorgesehen sein können.

Weiterhin kann als Metallschicht eine Chromschicht, als Metalllegierungssehicht eine Chromnickelschicht und als Metall-Keramik-Mischschicht eine CrAlN-Schicht mit Überschuss an Chrom und Aluminium, sowie als Keramikschicht eine CrAlN-Schicht vorgesehen sein,

Bei einer derartigen Schichtenfolge bzw. auch bei den anderen Schichtsystemen können zusätzlich Diffusionssperrschichten beispielsweise in Form einer CrN-Schicht zwischen der kathodische Korrosionsschutzschicht und dem Erosionsteilschutzsystem sowie innerhalb der Teilschichten des Erosionsteilschutzsystems vorgesehen sein.

Innerhalb der einzelnen Schichten, insbesondere der Metall-Keramik-Schicht bzw. dem Metallwerkstoff können phasenstabilisierende Elemente wie Wolfram, Tantal, Niob, Molybdän, Silizium, Titan, Vanadium oder Yttrium vorgesehen sein.
Allgemein kann die Metall-Keramik-Mischschicht bzw. Keramikschicht oder keramikhaltige Schicht des Erosionsteilschutzsystems durch Oxide, Nitride, Carbide oder Boride der Bestandteile der Metallschicht oder der Metalllegierungsschicht gebildet sein.
Die Schichten des Erosionsteilschutzsystems können durch Dampfphasenabscheidung abgeschieden werden, und zwar insbesondere durch physikalische Dampfphasenabscheidung (PVD physical vapor deposition).

Auf dem Erosionsteilschutzsystem ist zusätzlich eine passive Oberflächenkorrosionsschutzschicht ausgebildet, die zusätzlich auch als Glättungsschicht dienen kann, um eine saubere, glatte Oberfläche des Gasturbinenbauteils bereitzustellen.
Insbesondere kann die Oberflächenkorrosionsschutzschicht durch eine Sol-Gel-Schicht auf Silikatbasis, Kohlenstoffbasis, Polymerbasis oder Metalloxidbasis gebildet sein. Allgemein können jedoch passive Oberflächenkorrosionsschutzschichten vorgesehen sein, die in unterschiedlicher Art und Weise aufgebracht werden und bei den Umgebungseinflüssen die darunterliegende Schicht vor Angriff schützen. Dies können insbesondere Schichten sein, die Chromoxid- oder Aluminiumoxidschichten ausbilden oder umfassen.
Durch Verwendung einer Sol-Gel-Schicht als Oberflächenkorrosionsschutzschicht und/oder Glättungsschicht kann die passive Oberflächenkorrosionsschutzschicht durch Streichen, Tauchen oder dergleichen der flüssigen Sol-Phase aufgebracht und durch anschließendes Trocknen bzw. Aushärten zu einer Gelschicht unter Temperatureinwirkung umgewandelt werden. In ähnlicher Weise lässt sich die kathodische Korrosionsschutzschicht als anorganische Lackschicht durch entsprechende Lackiertechniken, wie Streichen, Tauchen, Spritzen und dergleichen auf den Grundwerkstoff aufbringen. Allerdings sind auch andere Aufbringungstechniken vorn entsprechenden kathodischen Korrosionsschutzschichten in Form von thermischem Spritzen, Dampfphasenabcheidung (CVP chemical vapor deposition, PVD physical vapor deposition) etc. möglich

Für Gasturbinenbauteile hat sich insbesondere eine kathodische Korrosionsschutzschicht in Form einer Keramik-Aluminiumschicht bewährt, bei der in einer Keramikmatrix Aluminiumpartikel eingelagert sind. Die Keramik kann hierbei Phosphate und Chromate umfassen. Die in die Keramik eingelagerten Aluminiumpulverpartikel können durch Glasperlenstrahlen verdichtet werden, so dass die Al-Pigmente ein Al-Netzwerk ausbilden.

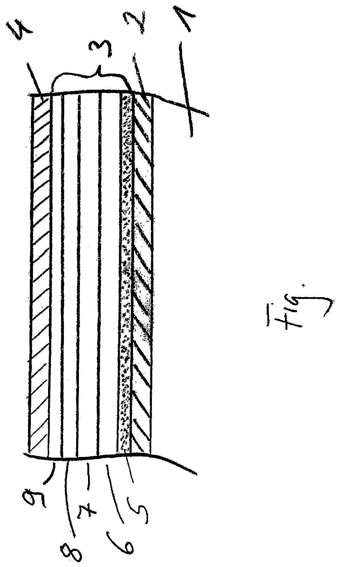

### KURZBESCHREIBUNG DER FIGUR

Weitere Vorteile, Kennzeichen und Merkmale der vorliegenden Erfindung werden bei der nachfolgenden detaillierten Beschreibung eines Ausführungsbeispiels anhand der beigefügten Zeichnung deutlich. Die einzige Zeichnung zeigt einen teilweisen Querschnitt durch die Oberfläche eines Gasturbinen Bauteils, wie beispielsweise einer Leit- oder Laufschaufel mit dem erfindungsgemäßen Erosionsschutz-Beschichtungssystem.

### AUSFÜHRUNGSBEISPIEL

Die Figur zeigt in einer teilweisen Schnittansicht des Oberflächenbereichs eines Gasturbinenbauteiles, wie beispielsweise einer Turbinenschaufel oder Turbinenauskleidungen (shroud), den Grundwerkstoff 1 des Bauteils, auf dem erfindungsgemäß eine mehrlagige Erosionschutz-Beschichtung mit den Teilschichten 2,3,4 angeordnet ist.

Unmittelbar auf dem Grundwerkstoff 1 ist eine kathodische Korrosionsschutzschicht 2 ausgebildet, welche aufgrund ihres geringeren elektrochemischen Potentials als Opferelektrode eines sich ausbildenden Korrosionselementes vorgesehen ist. Bei einem Korrosionsangriff, beispielsweise durch Risse oder Poren in der Beschichtung, kommt es nicht zu einer Auflösung des Grundwerkstoff 1 durch den Korrosionsangriff, sondern zunächst zu einer Auflösung der kathodischen Korrosionsschutzschicht 2, so dass der Grundwerkstoff 1 vor dem Korrosionsangriff geschützt ist.

Die kathodische Korrosionsschutzschicht 2 kann beispielsweise für einen Grundwerkstoff 1 aus einem chromhaltige Stahl durch eine Keramik-Aluminiumschicht gebildet sein, bei der in einer Keramikmatrix Aluminiumpartikel vorgesehen sind, welche das gegenüber dem chromhaltigen Stahl niedrigere elektrochemische Potential aufweisen. Durch das enthaltene Aluminium ist auch eine elektrisch leitfähige Verbindung zwischen der kathodischen Korrosionsschutzschicht 2 und dem Grundwerkstoff 1 gegeben, die für die Ausbildung des Lokalelements notwendig ist. Die kathodische Korrosionsschutzschicht kann auf den Grundwerkstoff abgestimmt sein und von daher unterschiedliche Zusammensetzungen aufweisen.

Auf der kathodischen Korrosionsschutzschicht 2 ist ein Erosionsteilschutzsystem gegeben, welches die eigentliche Erosionsschutzbeschichtung darstellt und den Grundwerkstoff 1 sowie die kathodische Korrosionsschutzschicht 2 vor Erosionsangriff bei der strömungsinechanischen Belastung in der Gasturbine, beispielsweise einer Flugturbine schützt.

Das Erosionsteilschutzsystem ist aus einer Vielzahl von Teilschichten 5, 6, 7, 8, 9 aufgebaut. Unmittelbar in Richtung des Grundwerkstoffes 1, also an der kathodischen Korrosionsschutzschicht 2 ist eine Diffusionssperrschicht 5, beispielsweise in Form einer Chromnitrid-Schicht vorgesehen. Diese verhindert die Diffusion zwischen Grundwerkstoff 1 bzw. kathodischer Korrosionsschutzschicht 2 und dem übrigen Beschichtungsaufbau.

Das Erosionsteilschutzsystem 3 umfasst weiterhin eine Vielzahl von sich wiederholenden Schichten 6, 7, 8, 9 wobei in der Darstellung der beigefügten Figur der Einfachheit halber lediglich eine einzige Schichtenabfolge des Mehrlagenschichtsystems 6 bis 9 vorgesehen ist. Allerdings können mehrere dieser Schichtenabfolgen mit den Teilschichten 6 bis 9 übereinander angeordnet sein.

Das Mehrschichtsystem aus den Teilschichten 6 bis 9 umfasst eine Metallschicht 6, eine Metalllegierungsschicht 7, eine Metall-Keramikschicht 8 und eine Keramikschicht 9. Die Zusammensetzung der entsprechenden Schichten 6 bis 9 kann auf den Grundwerkstoff 1 abgestimmt werden. So kann es sich beispielsweise für einen chromhaltige Stahl als Grundwerkstoff 1 bei der Metallschicht 6 um eine Chromschicht, bei der Metalllegierungsschicht 7 um eine Chrom-Nickelschicht, bei der Metall-Keramikschicht 8 um eine CrAlN₁₋ₓ-Schicht und bei der Keramikschicht 9 um ein CrAlN-Schicht handeln.

Die Metall-Keramikschicht 8 kann zudem als Gradientenschicht ausgebildet sein, bei der sich der Anteil des Keramikanteils in Richtung der Schichtdicke von der Metalllegierungsschicht 7 zu Keramikschicht 9 erhöht. Das geschilderte Ausführungsbeispiel für die Schichtzusammensetzung kann auch für einen Grundwerkstoff auf einer Nickelbasis-Legierung, einer Kobaltbasis-Legierung, einer Eisenbasis-Legierung oder einer Titanbasis-Legierung gewählt werden.
Die Metallschicht 6 kann zusätzlich ein phasenstabilisierendes Element wie Wolfram, Tantal, Niob und/oder Molybdän enthalten. Auch die Metall-Keramikschicht 8 bzw. die Keramikschicht 9 können entsprechende phasenstabilisierende Elemente wie Silizium, Titan, Tantal, Vanadium, Molybdän, Yttrium und/oder Wolfram umfassen.
Die Diffusionssperrschicht 5 aus Chromnitrid kann als nanostrukturierte Monolagenschicht sehr dünn ausgeführt sein.
Zwischen den einzelnen Teilschichten 6 bis 9 des Mehrschichtsystems 3 können zusätzliche Diffusionssperrschichten vorgesehen sein (nicht gezeigt).

Zum Abschluss des Erosionsschutzbeschichtungssystems ist an der Oberfläche eine passive Oberflächenkorrosionsschutzschicht 4 vorgesehen. Die passive Oberflächenkorrosionsschutzschicht 4 kann auch eine Glättung der Oberfläche bewirken und somit als Glättungsschicht bezeichnet werden. Im voran gezeigten Ausführungsbeispiel kann die Glättungsschicht bzw. Oberflächenkorrosionsschutzschicht 4 als Sol-Gel-Schicht auf Silikatbasis, Kohlenstoffbasis, Metalloxidbasis oder Polymerbasis ausgebildet sein. Die passive Oberflächenkorrosionsschutzschicht 4 kann bereits die Ausbildung eines Korrosionselementes mit Beteiligung des Grundwerkstoffs 1 verhindern, so dass zunächst in einem ersten Schritt auch die Auflösung der kathodischen Korrosionsschutzschicht 2 als Opferanode vermieden wird.
Die passive Oberflächenkorrosionsschutzschicht kann gemäß einem Sol-Gel-Verfahren aufgebracht werden, wobei das flüssige Sol durch Streichen, Spritzen oder Pinseln auf das Mehrlagenschichtsystem 3 aufgebracht und anschließend durch eine Wärmebehandlung getrocknet und ausgehärtet wird.
In gleicher Weise lässt sich die kathodische Korrosionsschutzschicht 2 in Form eines anorganischen Lacksystems durch Lackiertechniken, wie Streichen, Spritzen, Tauchen und dergleichen aufbringen, wobei ebenfalls eine anschließende Wärmebehandlung bei Temperaturen um 550°C durchgeführt werden kann, um die Aluminiumpartikel zu konsolidieren.
Das Erosionsteilschutzsystem 3 kann durch physikalische Dampfphasenabscheidung PVD (physical vapor deposition) abgeschieden werden.
Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen oder Änderungen innerhalb des Schutzbereichs, der durch die beigefügten Ansprüche definiert ist, möglich sind.

## Patentansprüche

1. Gasturbinenbauteil aus einem Grundwerkstoff (1) mit einem darauf vorgesehenen Erosionsschutz-Beschichtungssystem,
weiches ein Mehrschichtsystem aus mindestens einer duktilen, metallischen Schicht und mindestens einer harten, keramikhaltigen Schicht zur Bildung eines Erosionsteilschutzsystems (3) umfasst,
**dadurch gekennzeichnet, dass**
mindestens eine Korrosionsschutzschicht (2) zwischen Erosionsteilschutzsystem (3) und Grundwerkstoff (1) vorgesehen ist, die gegenüber dem zu beschichtenden Grundwerkstoff ein niedrigeres elektrochemisches Potenzial als der Grundwerkstoff aufweist, so dass eine kathodischer Korrosionsschutz ausgebildet ist,
dass die kathodische Korrosionsschutzschicht (2), das Erosionsteilschutzsystem (3) und eine passive Oberflächenkorrosionsschutzschicht (4) an der Oberflächenseite des Erosionsteilschutzsystem (3) so gewählt sind, dass das elektrochemische Potenzial der kathodischen Korrosionsschutzschicht kleiner als das des Grundwerkstoffs ist, während das elektrochemische Potenzial des Erosionsteilschutzsystems größer und das elektrochemische Potenzial der passiven Oberflächenkorrosionsschutzschicht sehr viel größer als das elektrochemische Potenzial des Grundwerkstoffs ist.

2. Gasturbinenbauteil nach Anspruch 1, **dadurch gekennzeichnet, dass** der Grundwerkstoff ein Cr-haltiger Stahl, eine Nickelbasis-Superlegierung, eine Eisenbasis-Superlegierung, Titanbasislegierung oder eine Kobaltbasis-Superlegierung ist.

3. Gasturbinenbauteil nach einem der vorhergehenden Ansprüche, **dadurch gekennzeichnet, dass** das Erosionsteilschutzsystem mindestens eine, vorzugsweise mehrere wiederholte Schichtenfolgen mit Schichten ausgewählt aus der Gruppe aufweiset, die umfasst: eine Metall-schicht (6), eine Metalllegierungsschicht (7), eine Metall-Keramik-Mischschicht (8) und eine Keramikschicht (9).

4. Gasturbinenbauteil nach Anspruch 3, **dadurch gekennzeichnet, dass** die Metallschicht Titan, Platin, Palladium, Wolfram, Chrom, Nickel oder Kobalt umfasst und/oder die Metalllegierung mindestens eine Komponente umfasst, die ausgewählt ist aus der Gruppe, die Titan, Platin, Palladium, Wolfram, Chrom, Nickel, Kobalt, Eisen, Aluminium, Zirkon, Hafnium, Tantal, Magnesium, Molybdän und Silizium umfasst.

5. Gasturbinenbauteil nach Anspruch 4, **dadurch gekennzeichnet, dass** die Metall-Keramik-Mischschicht und/oder die Keramikschicht mindestens ein Oxid, Nitrid, Karbid und/oder Borid mindestens eines Metalls der Metallschicht und/oder der Metalllegierungsschicht umfasst.

6. Gasturbinenbauteil nach einem der vorhergehenden Ansprüche, **dadurch gekennzeichnet, dass** das Erosionsteilschutzsystem mindestens eine Diffusionssperrschicht (5) an der Seite der Korrosionsschutzschicht (2) umfasst.

7. Gasturbinenbauteil nach Anspruch 6, dadurch gekennzeichet, dass die Diffusionssperrschicht (5) CrN umfasst.

8. Gasturbinenbauteil nach einem der vorhergehenden Ansprüche, **dadurch gekennzeichnet, dass** die passive Oberflächenkorrosionsschutzschicht eine Glättungsschicht (4) ist.

9. Gasturbinenbauteil nach Anspruch 8, **dadurch gekennzeichnet, dass** die Oberflächenkorrosionsschutzschicht und/oder Glättungsschicht eine Chromoxid- oder Aluminiumoxidschicht ausbildende Schicht und/oder eine Soi-Gel-Schicht auf Silikatbasis, Kohlenstoffbasis, Polymerbasis oder Metalloxidbasis ist.

10. Gasturbinenbauteil nach einem der vorhergehenden Ansprüche, **dadurch gekennzeichnet, dass** die kathodische Korrosionsschutzschicht (2) durch eine anorganische Lackschicht gebildet ist.

11. Gasturbinenbauteil nach einem der vorhergehenden Ansprüche, **dadurch gekennzeichnet, dass** die kathodische Korrosionsschutzschicht (2) eine Keramik-Aluminium-Schicht ist.

12. Gasturbinenbauteil nach einem der vorhergehenden Ansprüche, **dadurch gekennzeichnet, dass** das Gasturbinenteil eine Laufschaufel, eine Leitschaufel oder eine Turbinenauskleidung (shroud) ist.

13. Verfahren zur Herstellung eines Erosions-Beschichtungssystems eines Gasturbinenebauteils nach einem der vorgehenden Ansprüche, welches ein Mehrschichtsystem aus mindestens einer duktilen, metallischen Schicht und mindestens einer harten, keramikhaltigen Schicht zur Bildung eines Erosionsteilschutzsystems (3) umfasst,
wobei mindestens eine Korrosionsschutzschicht (2) zwischen Erosionsteilschutzsystem (3) und Grundwerkstoff (1) vorgesehen ist, die gegenüber dem zu beschichtenden Grundwerkstoff ein niedrigeres elektrochemisches Potenzial als der Grundwerk-stoff aufweist, so dass eine kathodischer Korrosionsschutz ausgebildet ist, wobei das Verfahren die Schritte umfasst:
a) Aufbringen der kathodischen Korrosionsschutzschicht (2);
b) Aufbringen des mehrlagigen Erosionsteilschutzsystems (3) mittels physikalischer Dampfphasenabscheidung (PVD physical vapour deposition),
wobei nach Schritt b) eine passive Oberflächenkorrosionsschutzschicht aufgebracht wird, insbesondere durch ein Sol-Gel-Verfahren.

14. Verfahren nach Anspruch 13, **dadurch gekennzeichnet, dass** zwischen Schritt a) und b) eine Diffusionssperrschicht aufgebracht wird.

15. Verfahren nach Anspruch 13 oder 14, dadurch gekenntzeichnet, dass die kathodische Korrosionsschutzschicht und/oder eine passive Oberflächenkorrosions-schutzschicht durch Streichen, Spritzen, Tauchen, thermisches Spritzen, chemische Dampfphasenabscheidung (CVD chemical vapour deposition) oder physikalische Dampf-phasenabscheidung (PVD physical vapour deposition) aufgebracht werden.

## Claims

1. A gas turbine component composed of a base material (1) having an erosion resistant coating system provided thereon, which comprises a multiple layer system of at least one ductile metal layer and at least one hard, ceramic containing layer in order to form an anti-erosion part protection system (3),
**characterized in that**
at least one corrosion protection layer (2) is provided between the anti-erosion part protection system (3) and the base material (1), which has a lower electrochemical potential towards the base material to be coated than the base material, so that cathodic corrosion protection is provided,
the cathodic corrosion protection layer (2), the anti-erosion part protection system (3) and a passive surface corrosion protection layer (4) on the surface side of the anti-erosion part protection system (3) are selected in a way that the electrochemical potential of the cathodic corrosion protection layer is lower than the one of the base material, while the electrochemical potential of the anti-erosion part protection system is higher and the electrochemical potential of the passive surface corrosion protection layer is much higher than the electrochemical potential of the base material.

2. The gas turbine component of claim 1, **characterized in that** the base material is a Cr-containing steel, a nickel based superalloy, an iron based superalloy, a titanium based alloy or a cobalt based superalloy.

3. The gas turbine component of any of the preceding claims, **characterized in that** the anti-erosion part protection system has at least one, preferably a plurality of repeated layer sequences having layers selected from the group composed of: a metal layer (6), a metal alloy layer (7), a metal ceramic mixed layer (8) and a ceramic layer (9).

4. The gas turbine component of claim 3, **characterized in that** the metal layer comprises titanium, platinum, palladium, tungsten, chrome, nickel or cobalt and/or the metal alloy comprises at least one component selected from the group comprising titanium, platinum, palladium, tungsten, chrome, nickel, cobalt, iron, aluminum, zirconium, hafnium, tantalum, magnesium, molybdenum and silicon.

5. The gas turbine component of claim 4, **characterized in that** the metal ceramic mixed layer and/or the ceramic layer comprise at least one oxide, nitride, carbide and/or boride of at least one metal of the metal layer and/or of the metal alloy layer.

6. The gas turbine component of any of the preceding claims, **characterized in that** the anti-erosion part protection system comprises at least one diffusion blocking layer (5) on the side of the corrosion protection layer (2).

7. The gas turbine component of claim 6, **characterized in that** the diffusion blocking layer (5) comprises CrN.

8. The gas turbine component of any of the preceding claims, **characterized in that** the passive surface corrosion protection layer is a smoothing layer (4).

9. The gas turbine component of claim 8, **characterized in that** the surface corrosion protection layer and/or the smoothing layer are a layer forming a chrome-oxide or aluminum-oxide layer and/or a sol-gel layer based on silicate, carbon, polymer or metal-oxide.

10. The gas turbine component of any of the preceding claims, **characterized in that** the cathodic corrosion protection layer (2) is formed by an inorganic paint layer.

11. The gas turbine component of any of the preceding claims, **characterized in that** the cathodic corrosion protection layer (2) is a ceramic-aluminum layer.

12. The gas turbine component of any of the preceding claims, **characterized in that** the gas turbine component is a rotor blade, a stator vane or a turbine enclosure (shroud).

13. A method for producing an erosion resistant coating system of a gas turbine component of any of the preceding claims,
which comprises a multiple layer system composed of at least one ductile, metal layer and at least one hard, ceramic containing layer in order to form an anti-erosion part protection system (3),
wherein at least one corrosion protection layer (2) is provided between the anti-erosion part protection system (3) and the base material (1), which has a lower electrochemical potential towards the base material to be coated than the base material, so that cathodic corrosion protection is provided, wherein the method comprises the following steps:
a) applying the cathodic corrosion protection layer (2);
b) applying the multiple layer anti-erosion part protection system (3) by means of physical vapor phase deposition (PVD physical vapor deposition),
wherein, after step b), a passive surface corrosion protection layer is applied, in particular by means of a sol-gel method.

14. The method of claim 13, **characterized in that** between steps a) and b) a diffusion blocking layer is applied.

15. The method of claim 13 or 14, **characterized in that** the cathodic corrosion protection layer and/or the passive surface corrosion protection layer are applied by painting, spraying, dipping, thermal spraying, chemical vapor phase deposition (CVD chemical vapor deposition) or physical vapor phase deposition (PVD physical vapor deposition).

## Revendications

1. Élément de turbine à gaz fabriqué à partir d'un matériau de base (1) comportant un système de revêtement de protection contre l'érosion prévu dessus,
lequel comprend un système multicouche composé d'au moins une couche métallique ductile et d'au moins une couche dure à base de céramique pour former un système de protection partielle contre l'érosion (3),
**caractérisé en ce**
**qu'**au moins une couche de protection contre la corrosion (2) est prévue entre le système de protection partielle contre l'érosion (3) et le matériau de base (1), laquelle présente, par rapport au matériau de base à revêtir, un potentiel électrochimique plus faible que le matériau de base, de sorte qu'une protection cathodique contre la corrosion est formée,
**que** la couche de protection cathodique contre la corrosion (2), le système de protection partielle contre l'érosion (3) et une couche de protection passive contre la corrosion des surfaces (4) sur la surface du système de protection partielle contre l'érosion (3) sont sélectionnés de sorte à ce que le potentiel électrochimique de la couche de protection cathodique contre la corrosion soit inférieur à celui du matériau de base, alors que les potentiels électrochimiques du système de protection partielle contre l'érosion et de la couche de protection passive contre la corrosion des surfaces sont respectivement supérieur et bien supérieur au potentiel électrochimique du matériau de base.

2. Élément de turbine à gaz selon la revendication 1, **caractérisé en ce que** le matériau de base est un acier contenant du chrome, un superalliage à base de nickel, un superalliage à base de fer, un alliage à base de titane ou un superalliage à base de cobalt.

3. Élément de turbine à gaz selon l'une des revendications précédentes, **caractérisé en ce que** le système de protection partielle contre l'érosion présente au moins une, de préférence plusieurs couches successives avec des couches choisies dans le groupe comprenant : une couche en métal (6), une couche en alliage de métal (7), une couche mixte en métal-céramique (8) et une couche en céramique (9).

4. Élément de turbine à gaz selon la revendication 3, **caractérisé en ce que** la couche en métal comprend du titane, du platine, du palladium, du tungstène, du chrome, du nickel ou du cobalt et/ou **en ce que** l'alliage de métal comprend au moins un composant qui est choisi dans le groupe comprenant le titane, le platine, le palladium, le tungstène, le chrome, le nickel, le cobalt, le fer, l'aluminium, le zircon, le hafnium, le tantale, le magnésium, le molybdène et le silicium.

5. Élément de turbine à gaz selon la revendication 4, **caractérisé en ce que** la couche mixte en métal-céramique et/ou la couche en céramique comprend au moins un oxyde, un nitrure, un carbure et/ou un borure d'au moins un métal de la couche en métal et/ou de la couche en alliage de métal.

6. Élément de turbine à gaz selon l'une des revendications précédentes, **caractérisé en ce que** le système de protection partielle contre l'érosion comprend au moins une couche barrière de diffusion (5) sur le côté de la couche de protection contre la corrosion (2).

7. Élément de turbine à gaz selon la revendication 6, **caractérisé en ce que** la couche barrière de diffusion (5) comprend du nitrure de chrome (CrN).

8. Élément de turbine à gaz selon l'une des revendications précédentes, **caractérisé en ce que** la couche de protection passive contre la corrosion des surfaces est une couche de lissage (4).

9. Élément de turbine à gaz selon la revendication 8, **caractérisé en ce que** la couche de protection contre la corrosion des surfaces et/ou la couche de lissage est une couche formant une couche d'oxyde de chrome ou d'alumine et/ou une couche sol-gel à base de silicate, de carbone, de polymère ou d'oxyde de métal.

10. Élément de turbine à gaz selon l'une des revendications précédentes, **caractérisé en ce que** la couche de protection cathodique contre la corrosion (2) est formée par une couche de peinture anorganique.

11. Élément de turbine à gaz selon l'une des revendications précédentes, **caractérisé en ce que** la couche de protection cathodique contre la corrosion (2) est une couche en céramique-aluminium.

12. Élément de turbine à gaz selon l'une des revendications précédentes, **caractérisé en ce que** l'élément de turbine à gaz est une aube mobile, une aube de guidage ou une garniture de turbine *(shroud).*

13. Procédé de fabrication d'un système de revêtement contre l'érosion d'un élément de turbine à gaz selon l'une des revendications précédentes,
lequel comprend un système multicouche composé d'au moins une couche métallique ductile et d'au moins une couche dure à base de céramique pour former un système de protection partielle contre l'érosion (3),
dans lequel il est prévu au moins une couche de protection contre la corrosion (2) entre le système de protection partielle contre l'érosion (3) et le matériau de base (1), laquelle présente, par rapport au matériau de base à revêtir, un potentiel électrochimique plus faible que le matériau de base, de sorte qu'une protection cathodique contre la corrosion est formée, le procédé comprenant les étapes :
a) d'application de la couche de protection cathodique contre la corrosion (2) ;
b) d'application du système multicouche de protection partielle contre l'érosion (3) à l'aide du dépôt physique en phase gazeuse (PVD physical vapour deposition),
lors duquel une couche de protection passive contre la corrosion des surfaces est appliquée après l'étape b), en particulier via un procédé sol-gel.

14. Procédé selon la revendication 13, **caractérisé en ce qu'**une couche barrière de diffusion est appliquée entre les étapes a) et b).

15. Procédé selon la revendication 13 ou 14, **caractérisé en ce que** la couche de protection cathodique contre la corrosion et/ou une couche de protection passive contre la corrosion des surfaces est appliquée par enduisage, pulvérisation, immersion, pulvérisation thermique, dépôt chimique en phase gazeuse (CVD chemical vapour deposition) ou dépôt physique en phase gazeuse (PVD physical vapour deposition).
